(19) Europäisches Patentamt
European Patent Office
Office européen des brevets

(11) **EP 4 319 091 B1**

(12) **EUROPEAN PATENT SPECIFICATION**

(45) Date of publication and mention
of the grant of the patent:
**17.06.2026  Bulletin 2026/25**

(21) Application number: **22306171.4**

(22) Date of filing: **02.08.2022**

(51) International Patent Classification (IPC):
*H04L 45/16* (2022.01)      *H04W 40/24* (2009.01)
*H04L 47/80* (2022.01)      *H04L 47/26* (2022.01)

(52) Cooperative Patent Classification (CPC):
**H04L 45/16; H04W 40/246;** H04L 47/26;
H04L 47/801

(54) **A TSN BRIDGE MODEL FOR 5G SYSTEMS WITH MULTIPLEXING CAPABILITIES**

TSN-BRÜCKENMODELL FÜR 5G-SYSTEME MIT MULTIPLEX-FÄHIGKEITEN

MODÈLE DE PONT TSN POUR SYSTÈMES 5G À CAPACITÉS DE MULTIPLEXAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.02.2024   Bulletin 2024/06**

(73) Proprietors:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **BONNEVILLE, Hervé
35708 RENNES CEDEX 7 (FR)**
• **GRESSET, Nicolas
35708 RENNES CÉDEX 7 (FR)**
• **LETESSIER, Jonathan
35708 RENNES CEDEX 7 (FR)**

(74) Representative: **Plasseraud IP
104 Rue de Richelieu
CS92104
75080 Paris Cedex 02 (FR)**

(56) References cited:
**WO-A1-2021/097637      WO-A1-2022/082724**

## Description

## Technical Field

This disclosure pertains to the field of telecommunications.

The disclosure more particularly relates to a method for determining a topology of a time-sensitive network model of a wireless bridge of a communication system within a time-sensitive network. The disclosure also relates to a corresponding communication system and to a corresponding computer program.

## Background Art

This disclosure addresses the problem of using a 5G network as a communication means for a time sensitive network (TSN), which was initially developed for providing communications with guaranteed time delivery on ethernet wired networks for industrial applications.

By convention in the current TSN standards, when flowing through a TSN bridge, an end-to-end delay is computed by taking into account the aggregated delays of the transport link between the previous bridge (external link) on the path and the internal link of the bridge between the input (ingress) and output (egress) ports. In a typical TSN network, these aggregated delays are considered in a central scheduler, or central network configuration node (CNC), that guarantees that no packet collision occurs on the transport links in the time domain.

In the context of a one-to-many bridge, the bottleneck lies in the external transport link, on which a TDMA (Time Division Multiple Access) strategy is applied as a result of the CNC scheduling. Even though the internal links of the bridges can be used concurrently, they are in practice used sequentially as a result of the TDMA on the input transport link. The impact on performance is minor when the capacity of the internal links is much higher than the one of the transport link. However, the convention of considering aggregated delays induces significant performance degradation when the internal links capacity is comparable to or worse than the external link one. Indeed, the bridge capability is limited by not exploiting the possibility of using internal links concurrently.

Such a situation occurs when considering a 5G TSN bridge, wherein the internal links capacity is related with the wireless transmission capacity, which is in general worse than the input link capacity relying on wired ethernet. By using the state-of-the-art model and representing the 5GS as a one-to-many topology, a TDMA strategy is applied among all packets flowing though the 5G TSN bridge. Unfortunately, the TDMA is often not the best multiplexing scheme for a wireless network, as other multiplexing dimensions can be exploited with an improved performance. Examples of multiplexing dimensions include frequency (using several sub-bands in the frequency domain), space (using multiple antennas) and site (frequency reuse among several non-interfering sites). Thus, the state-of-the-art definition of a model of the 5G TSN bridge fails to exploit the multiplexing capability of a 5GS, which results in a sub-optimal performance.

The time multiplexing capability of a 5GS is often well below the one of ethernet fixed networks. For example, the minimal time unit of a 5GS is a slot, which longs at least a hundred microseconds while the maximum frame duration on a gigabit ethernet link is around 12 microseconds. Thus, the low time granularity of the 5GS is taken into account in the declaration of the independent delay as a price to pay for any frame transmission. This is necessary as the dependent and independent delays are use in the CNC to compute guaranteed delays. However, the 5GS relies on a wireless interface which naturally allows broadcasting. This involves that several data flows can be transmitted concurrently with a variable capacity according to the deployment, terminal positions and channel conditions, number of data flows sharing the wireless channel concurrently, and so on. This multiplexing capability of the 5GS is not inherently taken into account when considering the state-of-the-art 5GS TSN bridge representation. Indeed, with this bridge model, the CNC presents packets at the bridge input in a TDMA fashion, following the low internal time granularity of the 5GS.

In order to improve the system performance and exploit the multiplexing capability of a wireless bridge such as a 5GS and compensate its low time granularity, it is needed to design a better TSN bridge model of such wireless bridge.

Patent document WO2021097637 discloses Multipoint transmission in a Time Sensitive Network (TSN): The Centralized Network control (CNC) determines the TSN bridge topology and configures bridges to deliver single frames to multiple receivers (one-to-many communication) with fewer Network ports (NW-TT) than Device Side ports (DS-TT).

## Summary

This disclosure improves the situation. The invention is defined by the appended claims.

It is proposed a method for determining a virtual topology of a wireless bridge of a communication system within a time-sensitive network, the wireless bridge handling a set of P user equipments (UEs), the communication system further comprising a centralized network configuration node,
the method comprising:

- building a virtual topology of the wireless bridge, the virtual topology comprising at least a main block comprising:

○ N network-side ports, with N < P, each network-side port being associated with a corresponding group of user equipments handled by the wireless bridge, the user equipments within a group sharing a non-independent quality of experience, wherein the non-independent quality of experience relates to competitive access to a set of physical channels used by the wireless bridge as a resource, such that user equipments having a competitive access to said set of physical channels are grouped together, and user equipments that have non-competitive access to said set of physical channels belong to different groups,

○ P device-side ports, a device-side port being associated with a corresponding user equipment, and

○ N independent channels, an independent channel connecting the device-side ports associated to the user equipments of a given group with the network-side port associated to the given group, and

- providing the virtual topology of the wireless bridge to the central network configuration node.

The main block represents the UE deployment as separate groups. N and P are natural numbers, with N being at least equal to 2, and with each group comprising at least one user equipment.

The non-independent quality of experience relates to a competitive access to a set of physical channels used by the wireless bridge as a resource to handle the set of UEs. UEs having a competitive access to said set of physical channels are grouped together. On the contrary, UEs that have a non-competitive access to said set of physical channels are considered separately, as being part of different groups. For instance, UEs that have a competitive access to a time resource, due to a lack of orthogonalization in other dimensions (e.g. no spatial or frequency) multiplexing, may be gathered in the same group, while UEs that do not have a competitive access to the time resource may belong to different groups.

The virtual topology of the wireless bridge accounts for this specific partitioning of the set of UEs into groups, since the UEs of a given group are considered, together, to be accessible through a common network-side port, while UEs of different groups are represented as being accessible through separate data paths involving a different network-side port.

In this regard, providing the virtual topology of the wireless bridge to the CNC allows taking advantage of multiplexing capabilities of the wireless bridge.

In particular, providing the topology of the main block allows data packets to be interpreted by the CNC as possibly arriving concurrently at different network-side ports. A consequence is that data transmission in the 5GS does not need to systematically follow a TDMA approach.

Providing the CNC with the topology of the main block equates to providing the CNC with knowledge related to the multiplexing capabilities of the wireless bridge in dimensions other than the time dimension. Providing the virtual topology of the wireless bridge model may comprise providing, for each independent channel, a pair of guaranteed delays associated to said channel, comprising a dependent delay and an independent delay both set to a non-zero value.

The CNC is then able to better exploit the multiplexing capabilities of the wireless bridge and to reduce end-to-end latency, by determining a TSN schedule involving concurrently activated UEs of different groups without inducing a performance loss.

The above method is understood as being implemented by computer means. In this regard, different functional entities may be defined. For instance, partitioning the set of P user equipments as defined above is performed by one or more processors executing one or more afferent instructions. As such, the partitioning may be conceptually seen as a task affected to a computational entity called 'partitioning module', or 'grouping module'. Similarly, building the topology is a task affected to a computational entity called 'topology building module'. Of course, the partitioning module and the topology building module may indifferently be hosted by the same physical entity such as a processor or by different physical entities. Providing the topology is a task affected to a computational entity called 'topology providing module', controlling a communication interface.

In another aspect, it is proposed a computer software, or program, comprising one or more instructions to implement at least a part of a method as defined here when the software is executed by a processor. In another aspect, it is proposed a computer-readable non-transient recording medium on which a software is registered to implement the method as defined here when the software is executed by a processor.

In another aspect, it is proposed a communication system within a time-sensitive network, the communication system comprising a wireless bridge handling a set of P user equipments (UEs), the communication system further comprising a centralized network configuration node,

the communication system being configured for:

- building a virtual topology of the wireless bridge, the virtual topology comprising at least a main block comprising:

○ N network-side ports, with N < P, each network-side port being associated with a corresponding group of user equipments handled by the wireless bridge, the user equipments within a group sharing a non-independent quality of experience, wherein the non-independent quality of experience relates to competitive access to a set of physical channels used by the wireless bridge as a resource, such that user equipments having a competitive access to said set of physical channels are grouped together, and user equipments that have non-competitive access to said set of physical channels belong to different groups,

o P device-side ports, a device-side port being associated with a corresponding user equipment, and

o N independent channels, an independent channel connecting the device-side ports associated to the user equipments of a given group with the network-side port associated to the given group, and

- providing the virtual topology of the wireless bridge model to the central network configuration node.

The following features can be optionally implemented, separately or in combination one with the others.

The wireless bridge comprising n physical network-side ports, the virtual topology may further comprise a demultiplexing block comprising:

- n network-side ports,
- N device-side ports, and
- N internal links, an internal link connecting a device-side port with a network-side port,
- a device-side port of the demultiplexing block being associated with a corresponding network-side port of the main block.

The primary aim of the demultiplexing block is to allow the virtual topology to be interpreted as having a single common network-side port for all data flows circulating through the wireless bridge.

Providing the virtual topology of the wireless bridge model then comprises providing, for each internal link of the demultiplexing block, a pair of guaranteed delays associated to said internal link, comprising a dependent delay and an independent delay. Both delays may be advantageously set to zero.

The groups may be formed within the set of P user equipments according to a predetermined criterion. The predetermined criterion may relate to an access of the set of user equipments to a set of physical channels used by the wireless bridge for handling the set of user equipments.

As a matter of fact, the results of the partitioning then differ depending on the various possible deployments of the set of user equipments and of the various deployments of the base stations, and in particular depending on the multiplexing capabilities of the wireless bridge for each such deployment.

The groups may be formed such that,

- a user equipment being activated when involved in a transmission of at least one data flow through the wireless bridge, and

- a data flow performance being related to a given data flow of the at least one data flow,

- for any first subset of user equipments belonging to the same group of user equipments, a concurrent activation of any user equipments of the first subset decreases the data flow performance for at least one given user equipment of the first subset, chosen among the concurrently activated user equipments of the first subset, with respect to when the given user equipment of the first subset is activated alone, and

- for any second subset of user equipments all belonging to different groups, a concurrent activation of any user equipments of the second subset does not decrease the data flow performance for any given user equipment of the second subset, chosen among the concurrently activated user equipments of the second subset, with respect to when the given user equipment of the second subset is activated alone.

The data flow performance is said to "decrease" when the difference in data flow performance between the concurrent activation and the single activation situations exceeds a predetermined threshold, which may be an absolute threshold or a relative threshold.

In the above example, any number of user equipments within the same group of user equipments have a competitive access to a time resource, while any number of user equipments each taken from a different group of user equipments do not.

The groups may be formed further based on indications related to multiplexing capabilities at one or more base stations for a deployment of user equipments.

As further illustrated, the indications related to the multiplexing capabilities may be of various natures and sources. The indications related to the multiplexing capabilities may for example comprise RAN-level information and/or measurements of end-to-end QoS KPI at the application layer for various activation topologies.

In an example, the wireless bridge may comprise a plurality of base stations each handling at least one corresponding user equipment, and the groups may be formed, based on indications of which base station handles each user equipment, so that any user equipments belonging to the same group are handled by the same base station.

It is further possible for user equipments to belong to different groups even if being handled by the same base station.

For instance, the wireless bridge may comprise a given base station handling a subset of the set of P user equipments by orthogonalizing transmission with the user equipments of said subset in a multi-antenna spatial dimension. The groups may then be formed, based on indications of the antenna used by the given base station to handle each user equipment of the subset, so that any user equipments of the subset belonging to the same group are handled by the same antenna of the given base station.

In the above examples, the indications related to the multiplexing capabilities are RAN-level information relating to spatial and frequency multiplexing.

The wireless bridge may also comprise a given base station handling two given user equipments by orthogonalizing transmission with said given two user equipments through a semi-static resource allocation scheme. The groups may then be formed, based on an indication of said allocation scheme, so that the two given user equipments are affected to different groups.

This example illustrates a way to take advantage of time-frequency multiplexing capabilities of the wireless bridge.

The multiplexing capabilities of wireless bridges may be asymmetric, meaning that uplink and downlink exhibit different performances.

In this regard, the non-independent quality of experience may be applied to data transfers all having the same orientation being either:

- downlink, defined as the data transfers being established from the wireless bridge to each user equipment, and

- uplink, defined as the data transfers being established from each user equipment to the wireless bridge,

such that the virtual topology is adapted to said orientation of the data transfers.

In other words, it is possible to build two separate virtual topologies of the same wireless bridge, one optimized for uplink and the other optimized for downlink. This possibility is enabled by the unidirectional nature of the delays provided to the CNC.

To do so, the method may further comprise building an additional virtual topology of the wireless bridge being adapted to the opposite orientation, the additional virtual topology comprising at least a main block comprising:

- M network-side ports, a network-side port being associated with a corresponding group of user equipments handled by the wireless bridge with a non-independent quality of experience applied to said opposite orientation,

- P device-side ports, a device-side port being associated with a corresponding user equipment, and

- M independent channels, an independent channel connecting the device-side ports associated to the user equipments of a given group with the network-side port associated to the given group, and

providing the additional virtual topology of the wireless bridge to the central network configuration node.

M is a natural number that may be equal to, or different from, N. For example, a virtual topology of the wireless bridge optimized for downlink may comprise not only N independent channels associated to finite delays, but also M additional independent channels (or M network-side ports) associated to infinite delays. Similarly, a virtual topology of the wireless bridge optimized for uplink may comprise not only M independent channels associated to finite delays, but also N additional independent channels associated to infinite delays. Both virtual topologies then comprise the same number of N+M independent channels. Each of said channels corresponds to the same equivalent virtual port pair in both virtual topologies, which only differ by the values of the delays advertised to the CNC. In another example, one network-side port is associated to one independent downlink channel associated with a finite downlink delay and one independent uplink channel associated with a finite uplink delay; another network-side port is associated to one independent downlink channel only, associated with a finite downlink delay, the delay corresponding to the uplink direction being set to infinite, and another network-side port is associated to one independent uplink channel only, associated with a finite uplink delay, the downlink direction being associated to an infinite delay.

**Brief Description of Drawings**

Other features, details and advantages will be shown in the following detailed description and on the figures, on which:

**Fig. 1**

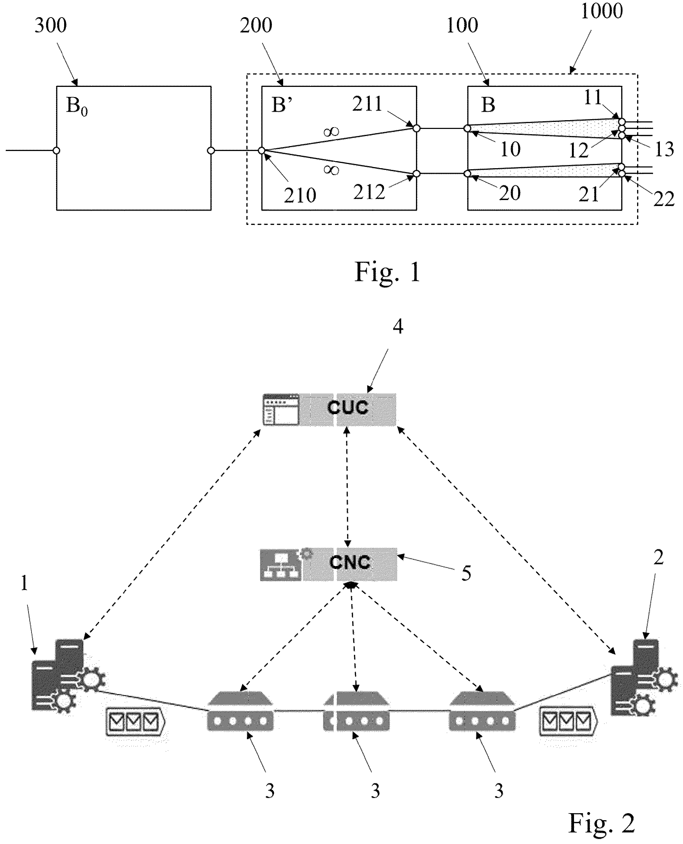

[Fig. 1] is an example of a TSN wireless bridge model according to an embodiment.

**Fig. 2**
[Fig. 2] is an example of a TSN network according to an embodiment.

**Fig. 3**

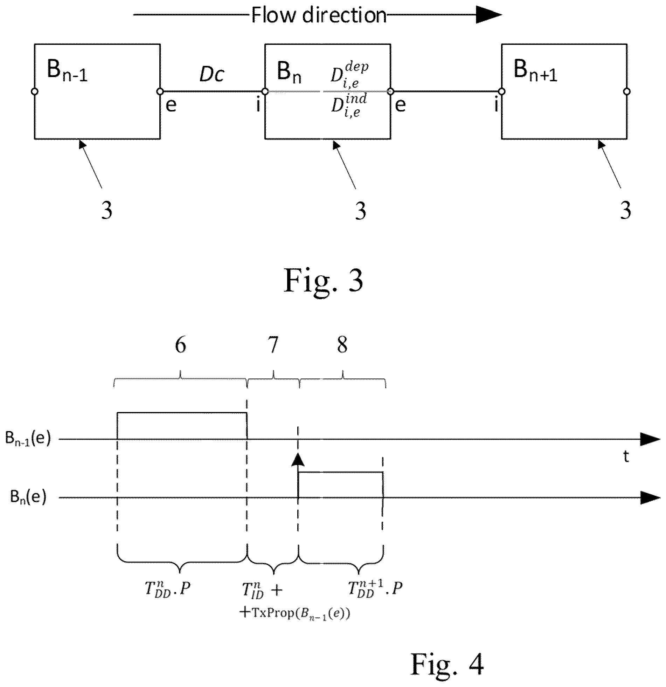

[Fig. 3] illustrates delay computation between two end stations through a TSN bridge according to an embodiment.

**Fig. 4**
[Fig. 4] illustrates gate opening and packet propagation along a data path according to an embodiment.

**Fig. 5, Fig. 6, Fig. 7**

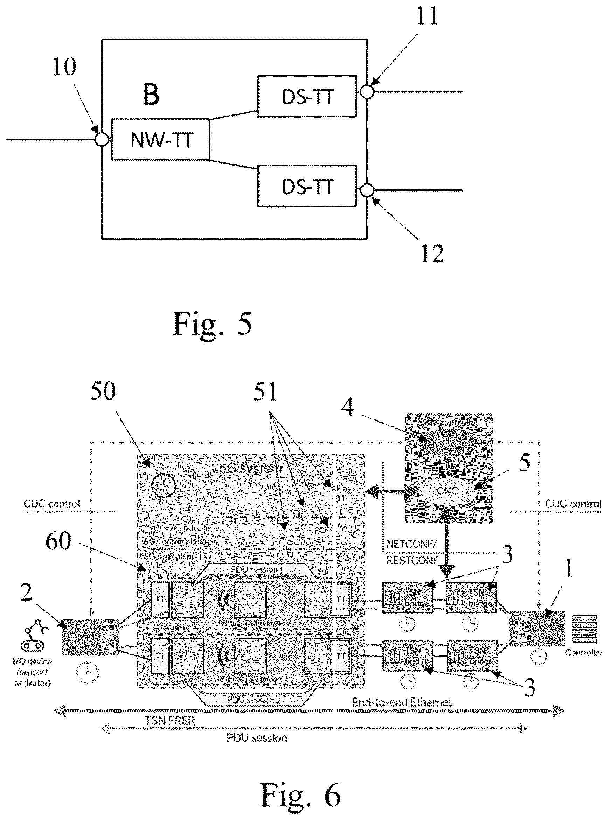

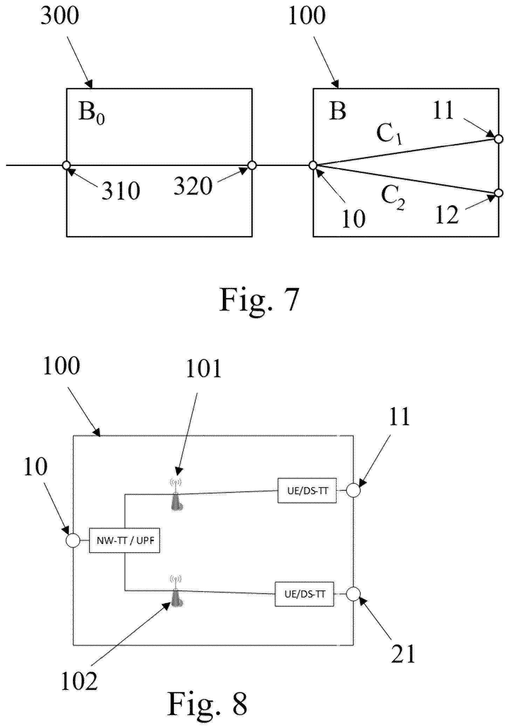

[Fig. 5], [Fig. 6] and [Fig. 7] are state-of-the-art representations of a 5GS as a TSN bridge, with different levels of detail. Figure 6 may be found in Ericsson

EP 4 319 091 B1

Technology Review, 5G-TSN integration meets networking requirements for industrial automation, August 2019, Farkas, J.; Varga, B.; Miklós, G.; Sachs, J.

**Fig. 8**

[Fig. 8] illustrates spatial and frequency multiplexing between different node base stations of a wireless bridge according to an embodiment.

**Fig. 9, Fig. 10**

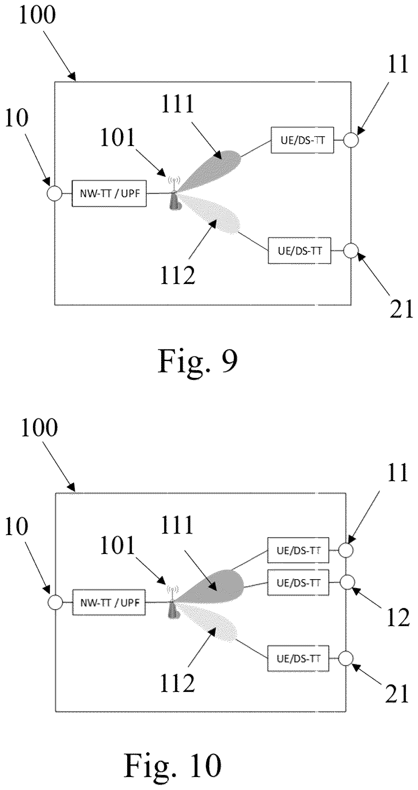

[Fig. 9] and [Fig. 10] illustrate spatial multiplexing using multiple antennas at a node base station of a wireless bridge according to an embodiment.

**Fig. 11**

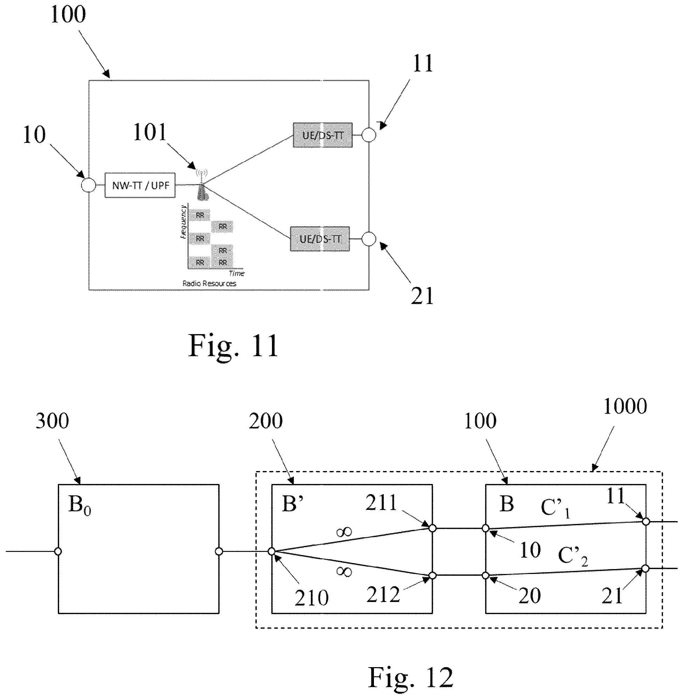

[Fig. 11] illustrates time frequency multiplexing through static scheduling or slicing at a node base station of a wireless bridge according to an embodiment.

**Fig. 12**

[Fig. 12] is an example of a TSN wireless bridge model according to an embodiment.

**Fig. 13**

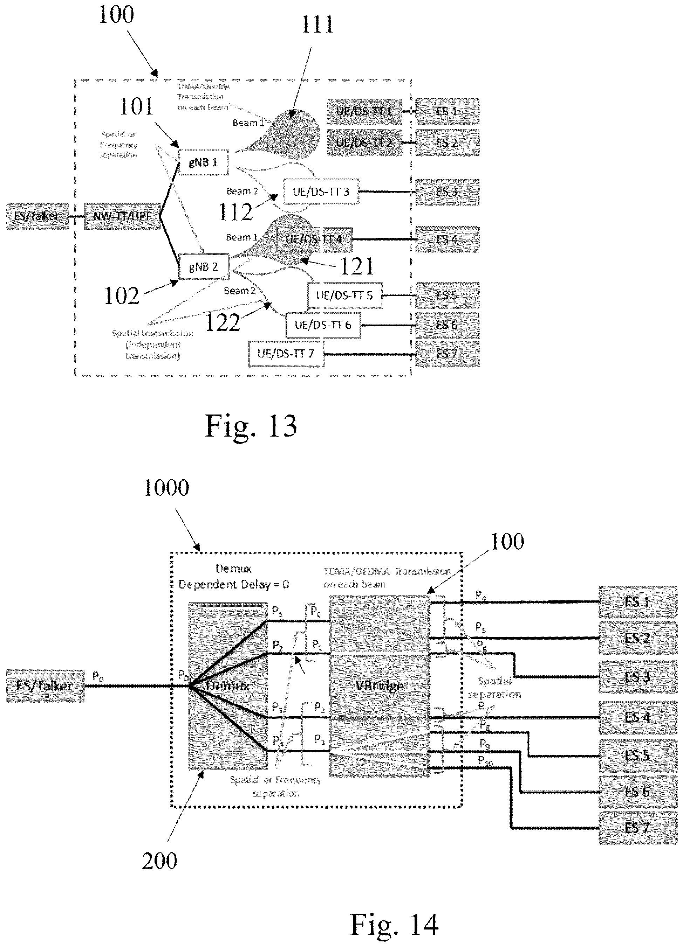

[Fig. 13] illustrates a deployment of a wireless communication system according to an embodiment.

**Fig. 14**

[Fig. 14] is an example of a TSN wireless bridge model of the wireless communication system of Fig. 13, according to an embodiment.

**Fig. 15**

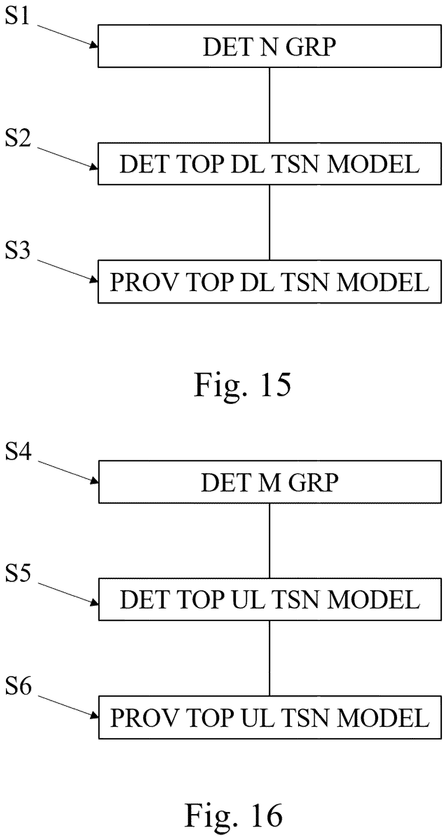

[Fig. 15] is a flow chart of a software-implemented method for determining a topology, suitable for downlink, of a TSN wireless bridge according to an embodiment.

**Fig. 16**

[Fig. 16] is a flow chart of a software-implemented method for determining a topology, suitable for uplink, of a TSN wireless bridge according to an embodiment.

**Fig. 17**

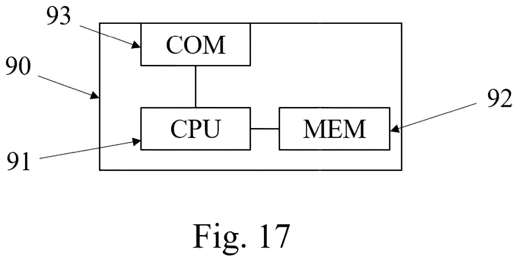

[Fig. 17] is an example of a processing circuit, suitable for running the software represented on Fig.15 and Fig.16, according to an embodiment.

**Description of Embodiments**

The disclosure involves clustering the different user equipments handled by a wireless bridge such that a given cluster regroups user equipments which concurrent activation translates into a performance loss with respect to a sequential activation. Any user equipment belongs to a single cluster. After this clustering, a main block (100) is then built.

The main block (100) comprises as many network-side ports (10, 20) as the number of clusters, and as many device-side ports (11, 12, 13, 21, 22) as the number of user equipments handled by the wireless bridge. The main block further comprises one internal link per device-side port. These internal links are not shown individually on Figure 1.

Each cluster is associated to a corresponding network port (10, 20).

Each user equipment is associated to a corresponding device-side port (11, 12, 13, 21, 22).

For each given user equipment, a corresponding internal link, having a finite capacity, connects the device-side port (12) associated to said equipment with the network-side port (10) associated to the cluster comprising said equipment.

An example of a virtual topology (1000) comprising such main block (100), is provided in figure 1.

Each internal link has a capacity noted $C'_i$. 'Capacity' is here used as a term which describes the ability of a wireless bridge to handle data, and which is related to a bandwidth. In a TSN network, the capacity is converted in dependent and independent delays.

On figure 1, five internal links are represented:

- a first link between a first NW port and a first DS port, having a capacity noted $C'_1$,
- a second link between the first NW port and a second DS port, having a capacity noted $C'_2$,
- a third link between the first NW port and a third DS port, having a capacity noted $C'_3$,
- a fourth link between a second NW port and a fourth DS port, having a capacity noted $C'_4$, and
- a fifth link between the second NW port and a fifth DS port, having a capacity noted $C'_5$.

The main block (100) provides an accurate depiction of the performance at the wireless bridge when concurrently activating user equipments that belong to different clusters. Advertising such accurately depicted performance of the wireless bridge to a centralized network configuration (CNC) node of a time-sensitive network allows the CNC to improve this performance. Examples of such improvements involve increasing the number of supported TSN data streams and/or setting reduced guaranteed delays for TSN data streams flowing through the 5GS bridge

Figure 1 further displays, as an optional feature, a demultiplexing block (200) having a single network-side port (210) and as many device-side ports (211, 212) as the number of network-side ports (10, 20) in the main block (100). The demultiplexing block (200) further comprises, for each device-side port (211, 212), an internal link having an infinite capacity, connecting said device-side port to the network side port (30).

A purpose of this demultiplexing block (200) is to allow for the virtual topology (1000) of the wireless bridge to be interfaced, in a simple fashion, with a model of another TSN bridge (300).

This is related to the state-of-the-art representation of intermediary TSN bridges interfacing with one another using a single network-side port.

This specificity may be kept by representing any wireless bridge in the TSN network by a combination of the main block (100) and of the demultiplexing block (200), with the device-side ports (211, 212) of the demultiplexing block (200) being, each, connected to a corresponding network-side port (10, 20) of the main block (100).

The resulting virtual topology (1000) may then be interfaced, through the network-side port (210) of the demultiplexing block (200), with another TSN bridge (300).

In the following, the disclosure is described focusing on downlink, which is transmission by base stations and reception by terminals. Of course, the disclosure applies as well to uplink and to the combination of uplink and downlink.

TSN Networks

The disclosure focuses on the transmission of packets with delay constraints. For achieving a guaranteed end-to-end latency for the transmission of a packet between a talker and a listener, it is necessary to rely on a predetermined data path or route and scheduling of operation of the network elements along the path.

According to the fully centralized model of IEEE 802.1Qcc, a TSN network comprises several elements as illustrated in Figure 2.

A talker (1) and a listener (2) are represented on Figure 2, both as end stations (ES) of the TSN network. A series of TSN bridges (3) is further represented.

TSN bridges (3) are the packet switching devices of a TSN network. Packets arriving to an ingress port of a bridge can be routed to an egress port in a bounded delay, according to some parameters specific to each port pair, represented by an internal link. The parameters are usually: a dependent delay factor (i.e., which depends on the payload and can be seen as the inverse of the instantaneous throughput of the link) and an independent delay (i.e., a fixed delay for each communication).

A TSN network further comprises a centralized user configuration node (CUC) (4) configured to communicate with the end stations (1, 2) in order to receive their flow requirements.

A TSN network further comprises a centralized network configuration node (CNC) (5). The CNC is able to receive, from the different TSN bridges, egress and ingress port identification, traffic class and QoS indicators as minimum and maximum delays per port pairs.

The CNC (5) is further able to receive from the CUC (4) and from the TSN bridges (3), through a user-/network interface, data related to user configuration. The data related to user configuration may comprise the flow requirements of the end stations. The data related to user configuration may further comprise a TSN network topology that is related to the flow requirements of the end stations. The data related to user configuration may further comprise capacities of network links according to said topology.

The CNC (5), having gathered the topology and capacities of the network links as well as the requirements of the data streams as described above, defines routing decisions, i.e. bridge selection, in other words the data path for transmitting packets from one end station (1) to another end station (2) through the bridges (3). This data path is computed by the CNC, in a known manner, so as to fulfil the stream requirements of the TSN flows.

The CNC (5) further computes a scheduling of gate openings for the packets to flow from one ES to another ES while guaranteeing their transmission delay, with the constant purpose of fulfilling the stream requirements of the TSN flows. For doing so, the CNC computes the cumulated delay from egress port to egress port of two consecutive bridges on the computed data path, where the egress ports are defined at the output port of the bridges in the flow direction of the packets along the path (while ingress ports are the bridges input ports).

The scheduling calculated at the CNC is a time-gating window table, according to which gates are sequentially opened and closed. In practice, for each bridge port, the packets are buffered and transmitted sequentially when the corresponding gate opens. Thus, time multiplexing is inherent to each bridge port, while concurrent transmission is possible between two different ports of a TSN bridge.

TSN bridge model description

Figure 3 illustrates the definition of the dependent and independent delays from an egress port of a bridge to the egress port of another bridge on a data path associated to a given data stream.

Three bridges (3), noted Bn-1, Bn and Bn+1, are represented on the data path.

More specifically, for a given bridge Bn, an ingress port, noted i, and an egress port, noted e, are represented on the data path and form an oriented port pair.

Per oriented port pair, the dependent delay provided by the bridge Bn is the sum of:

- a delay, noted $D_c$, corresponding to cable bandwidth between the egress port of the previous bridge Bn-1 on the data path and the ingress port of Bn, and

- a delay, noted $D_{i,e}^{dep}$, corresponding to an internal bandwidth in Bn.

Per oriented port pair, the independent delay, noted $D_{i,e}^{ind}$ , provided by the bridge Bn corresponds to internal mechanisms in Bn that are not linked to packet length.

In addition, per egress port of Bn, a propagation delay, noted TxPropagationDelay, may be defined as the transmission delay in cable between said egress port and the ingress port of Bn+1 on the data path.

Different streams may follow different data paths that each includes a different oriented port pair within the bridge Bn. The dependent and independent delays provided by the bridge Bn may differ from an oriented port pair to another, and the propagation delay TxPropagationDelay downstream may also differ from an egress port to another.

Figure 4 illustrates opening times of bridge gates, as defined by the CNC, in order to propagate a packet, having a packet size P, along the data path.

Three consecutive time intervals (6, 7, 8) are represented on Figure 4.

The first time interval (6) corresponds to a bridge gate opening at the bridge Bn-1. During this time interval, the bridge Bn-1 is allowed to transmit the packet through its egress port situated on the data path. The time length of this time interval is computed from the dependent delay provided by the bridge Bn for the oriented port pair on the data path and from the packet size P.

The second time interval (7) starts at the end of the first time interval (6) and has a time length corresponding to the sum of:

- the propagation delay associated to the egress port of Bn-1 on the data path, and of

- the independent delay provided by the bridge Bn for the oriented port pair on the data path.

Assuming the packet has been successfully transmitted by the bridge Bn-1 during the first time interval, the packet is then guaranteed to be available at the egress port of the bridge Bn by the end of the second time interval.

The third time interval (8) starts at the end of the second time interval (7) and corresponds to a bridge gate opening at the bridge Bn. During this time interval, the bridge Bn is allowed to transmit the packet through its egress port situated on the data path. The time length of this time interval is computed from the dependent delay provided by the bridge Bn+1 for the oriented port pair on the data path and from the packet size P.

As previously mentioned, the end-to-end delay between two end stations is computed by taking into account the aggregated delays of the transport link between the previous bridge (external link) on the path and the internal link of the bridge between the input (ingress) and output (egress) ports. This is described in the 802.1Qcc standard as: "The length-dependent delay typically includes the time to receive and store each octet of the frame, and this time depends on the link speed of the ingress Port. For example, if the ingress Port is operating at 1 Gb/s, both dependentDelayMin and dependentDelayMax can return 8000. If an internal communication mechanism exists within the Bridge's architecture (i.e., in the relay), the time for that mechanism is added to the frame-dependent delay. For example, if a 100 Mb/s serial link connects the ingress and egress Ports, the previous example with 1 Gb/s link speed can return 88000 for both dependentDelayMin and dependentDelayMax" (dependent delays are expressed in pico seconds as per 802.1Qcc standard).

5GS TSN Bridge Model Description

In the state-of-the-art approach of the integration of 5G systems (5GS) in a TSN network, the 5GS is represented as a regular TSN bridge, with typically a one-to-many topology containing ports/gates as illustrated in Figure 5 where the bridge has one NW (network-side) port (10), and two DS (device-side) ports (11, 12). The internal structure of the 5GS bridge involves network-side translators (NW-TT) which are elements of the 5GS making the interface between the TSN network and the 5G user plane (UP) in the 5G core network side and device-side translators (DS-TT) making the interface between the 5G UP and the wireless devices in the access network side . Optionally, several ports may be associated to one network-side translator.

A more complete view of the internal structure of a 5GS is given in Figure 6. The main components of a 5GC (5G core network) and of a 5G RAN (5G radio access network) are represented in the form of nodes, or functional entities.

In particular, a functional split is observed between a control plane (50) and a user plane (60).

The control plane involves a PCF (Policy Charging Function) and a TSN-AF (Time-Sensitive Network Application Function), both of which are nodes (51) of the 5GC.

The user plane involves a UPF (User Plane Function) for routing packets between 5G-RAN and network (NW) ports. The user plane further involves the 5G-RAN, more specifically the gNBs (next generation Node Base stations) which are configured to communicate with the UPF and to handle UEs (User Equipments).

In the user plane, it is possible to consider virtual TSN bridges. Considering a given data path, the virtual TSN bridge is defined with a NW port and a plurality of DS ports, with:

- the NW port being handled by the UPF, and

- each DS port being connected to a corresponding UE handled by a gNB.

The figure also shows control elements of a TSN network, in the form of a CUC (4) (Centralized User Configuration node) and a CNC (5) (Centralized Network Configuration node) that are connected with the 5GS control plane via the TSN-AF.

On the control plane, the TSN application function (TSN-AF) computes the capacity parameters of the 5GS bridge internal links.

When considering an end station (1) connected to the NW ports of virtual TSN bridges and several end stations (2) connected to the DS ports associated to the UEs of the 5GS, it is natural to consider that each DS port and DS-TT is associated to each UE, as illustrated in the state-of-the-art Figure 6 which represents two 5GS bridges, each being defined on the network side by one NW-TT and one UPF.

Then, the dependent and independent delays associated to the port pairs of the virtual TSN bridges are related with the UE radio link capacity in the 5GS, as illustrated in Figure 7.

Figure 7 represents a succession of two TSN bridges on a data path. Downlink is exemplarily considered.

The representation (300) of the upstream TSN bridge $B_0$ (300) shows ingress ports (310) and egress ports (320).

One of the egress ports (320), in the representation (300) of the upstream TSN bridge $B_0$, is connected to the ingress NW port (10) on the representation, as a main block (100), of a downstream virtual TSN bridge B. The representation of the virtual TSN bridge further comprises, at least, two egress DS ports (11, 12). Each egress port (11, 12) is linked to the ingress port (10) via a corresponding internal link. The capacities of the internal links are noted $C_1$ and $C_2$. In practice, the capacity of an internal link relates to the capacity of a radio link between a gNB and a UE.

According to the fact that the ingress port (10) of B buffers the received packets with time multiplexing and that the CNC opens the gates of the egress port (310) of $B_0$ such that no packet collision occurs, packets are transmitted through the egress ports (11, 12) of B via the two internal links in a non-concurrent fashion.

This results in a TDMA (Time Division Multiple Access) transmission of the packet within the 5GS, imposed by the sequential packet arrival at the upstream egress port (310) of $B_0$. Thus, the capacities $C_1$ and $C_2$ can be declared as the capacity of each UE when activated alone in the 5GS.

Unfortunately, the TDMA is often not the best multiplexing scheme for a wireless network, as other multiplexing dimensions can be exploited without loss of performance, such as frequency (using several subbands in the frequency domain), space (using multiple antennas), site (frequency reuse among several non-interfering sites). Thus, the state-of-the-art definition of a model of the 5G TSN bridge fails to fully exploit the multiplexing capability of the 5GS, which results in suboptimal performance.

Determining dependence groups

The multiplexing capabilities of a wireless bridge, such as a 5GS bridge, are identified in order to build a virtual topology (1000) of the wireless bridge that is suitable for the CNC (5) to exploit the wireless bridge under the 802.1Qcc standard.

Identifying the multiplexing capabilities of the wireless bridge, other than time multiplexing, corresponds to evaluating, performance-wise, the possibilities of performing concurrent data transmission in the time domain from and/or to different UEs. Concurrent data transmission is transmitting data during overlapping time from and/or to different UEs handled by one or more gNBs of the wireless bridge. Conversely, sequential data transmission is consecutively transmitting data (in time) from and/or to different UEs handled by one or more gNBs of the wireless bridge. In the following, a UE is said 'activated' when involved in the transmission or reception of at least one data flow, and is said 'inactivated' otherwise.

In other words, identifying the multiplexing capabilities of the wireless bridge, other than time multiplexing, corresponds to determining whether communication with specific UEs involves or not a competitive access to radio resource.

The multiplexing capabilities of the wireless bridge may be determined, for example, from:

- known locations of base stations and of UEs,

- known radio conditions between base stations and UEs,

- known base station scheduling configuration, and/or

- for a number of data flows transmitted through the wireless bridge, each using a different data path, measurements related to performance of each said data flow.

The UEs handled by the wireless bridge are then distributed in a plurality of groups, based on the determined multiplexing capabilities of the wireless bridge.

Specifically, UEs belong to the same group if their concurrent activation decreases the performance of at least one data flow of at least one of said UEs, with respect to the data flow performance obtained when the UEs are each activated alone, sequentially.

For any set of UEs all belonging to different groups, their concurrent activation does not decrease any data flow performance with respect to the one obtained when the UEs of the set are activated alone.

As already mentioned, the difference between the performance of the at least one data flow under concurrent activation and under sequential activation conditions may result of data flow performance measurements, rather than directly resulting of a topological analysis of the wireless bridge. The difference between such measurements may be automatically compared to a predetermined, absolute or relative, non-zero threshold in order to unequivocally determine whether such difference corresponds or not to a decrease in performance.

Let us consider some examples of UE deployments in which the concurrent transmission of packets does not degrade the data flow performance at each UE, and thus exhibits multiplexing capabilities other than time multiplexing.

Figure 8 illustrates a deployment of two UEs under two different gNBs (101, 102). The radio access network is usually designed such that no significant interference is observed in the downlink or uplink of neighboring gNBs. This can be achieved, for instance: by using different frequency bands, by controlling the power of gNBs and UEs and/or by using mixed frequency/power control, known as inter-cell interference coordination.

As a result, the data transmission from/to any UE handled by a first gNB (101) does not impact the performance of a data transmission from/to any UE handled by a second gNB (102). Such multiplexing capability belongs to frequency and spatial multiplexing as the transmissions are isolated from each other thanks to the spatial configuration of the transmitter and receiver, and/or to an orthogonality in the frequency band usages.

In this case, when distributing the UEs handled by the wireless bridge in a plurality of groups, based on the determined multiplexing capabilities of the wireless bridge, two groups of UEs may for example be formed: one formed of all UEs handled by the first gNB, the other formed of all UEs handled by the second gNB. More generally, in this case, more than two groups of UEs may be formed if additional multiplexing capabilities of the wireless bridge are identified. Yet, none of the formed groups of UEs can comprise both a UE handled by the first gNB (101) and a UE handled by the second gNB (102).

Figure 9 illustrates a deployment of two UEs within the coverage of the same gNB (101), where the gNB is equipped with multiple antennas and generates, for example, multiple beams (111, 112). Different multi-antenna technologies, such as beamforming as represented in Figure 9, allow to orthogonalize the transmission of several UEs in a multi-antenna spatial dimension. This involves that two UEs can use the same time frequency resource without a significant performance loss. Thus, in this example, these two UEs may be distributed in two different groups of UEs.

In some cases, as shown in Figure 10, and in particular when the UEs are spatially close to each other, the UEs cannot be orthogonalized through multi-antenna techniques.

In Figure 10, three UEs are represented:

- a first UE, connected to a first DS port (11), is handled by a gNB (101) using a first antenna generating a first beam (111),
- a second UE, connected to a second DS port (12), is handled by the gNB (101) using the first antenna generating the first beam (111), and
- a third UE, connected to a third DS port (21), is handled by the gNB (101) using a second antenna generating a second beam (112).

The first and the second UEs are considered spatially close together, so that they are both reached by the gNB by using the same antenna.

Assuming that the first and the second UEs are not orthogonalized, then a first group of UEs comprising the first and the second UEs can be formed and a second group of UEs comprising the third UE can be formed, following the definition of groups given above, according to the multi-antenna spatial orthogonality given by the multi-antenna techniques used at the base station and UEs.

In Figure 11, two UEs, connected to different DS ports (11, 21), are under the coverage of the same gNB (101). One strategy for the gNB can be to allocate semi-statically a given share of the radio resources to the active UEs, whatever the status of their traffic (i.e., before knowing whether a packet will be available for transmission or not). For example, semi-persistent scheduling may achieve such result in order to guarantee a QoS for guaranteed bit rate (GBR) traffic. As a result, whatever the data traffic for each UE, their performance is independent. In this case, the two UEs may be affected to different groups of UEs, following the definition of groups given above.

As shown in the examples above, by analysing the deployment and capabilities of orthogonalization of transmission related to several UEs, it is possible to group the UEs such that UEs belonging to the same group have a competitive access to the radio resource (i.e., they impact each other's performance when activated concurrently), while any UEs belonging to different groups are independent performance-wise.

Proposed TSN model of the 5GS

It is now referred to Figure 1.

Once the groups of UEs are formed and identified, it is possible to determine a main block (100) that is representative of whether different UEs have a competitive access to the radio resource or, on the contrary, whether their concurrent activation does not impact data flow performance.

The topology of the main block (100) is as following.

The main block (100) comprises as many NW ports (10, 20) as the number of identified groups of UEs. The main block (100) further comprises as many DS ports (11, 12, 13, 21, 22) as the total number of Ues across all identified groups of Ues. The main block (100) further comprises an internal link between each NW port and all the Ues belonging to the associated group.

Alternatively, the main block (100) may be determined as a plurality of model portions, one for each group of Ues, each model portion having only one NW port and as many internal links and DS ports as the number of Ues in the associated group.

Any configuration of merging of these model portions is possible as long as the configuration links between the group-related NW ports and the UE-related DS ports are kept.

The capacity on the internal links of the main block (100) can be learnt through measurement, i.e., data packets are sent to any UE and the capacity or delay is measured. As a remark, the UEs of the same group should be learnt independently, which involves that the capacity obtained for a given internal link is the capacity when the corresponding UE is the only one activated among the group of UEs it belongs to.

The external link arriving at any ingress port of the main block (100) may be assumed to have zero dependent and independent delays.

The number of physical NW ports a 5G TSN bridge can have is not necessarily equal to the number of UE groups that have been identified. Moreover, state-of-the-art models of 5G TSN bridges often comprise a single NW port. Hence, it is necessary to be able to define a model that conforms from external point of view to the physical topology of the 5G wireless bridge.

In order to conform to physical port topology, one can optionally further introduce a demultiplexing (Demux) bridge model (200) with a NW port (210) number corresponding to the physical NW port number of the 5G TSN bridge and as many DS ports (211, 212) as the number of identified groups of UEs. The demultiplexing bridge further comprises, per DS port, an internal link with the NW ports. These internal links have zero independent and dependent delays, which corresponds to an infinite capacity. The external links have the characteristics of the physical interface linking the 5GS CN to the TSN network, which usually is an Ethernet interface.

A simplified example of a virtual topology (1000) comprising a demultiplexing block (200) with one NW port and a main block (100) is provided in Figure 12, where B' and B are the Demux and Main bridges, respectively.

The 5GS has two degrees of multiplexing which can each support a capacity $C'i$. The packets can arrive concurrently at the ingress ports (10, 20) of B, i.e. packets can arrive at ports (10, 20) separated by a time value depending on B' ingress link bandwidth, so that they can be viewed as concurrent for B with respect to its internal links capacities, which does not impose a TDMA transmission in the 5GS.

As a result, the end-to-end delay for transmitting two identical packets from an upstream bridge B0 to end stations associated to egress ports (11, 21) of B are related with $1/C'1 + 1/C'2$ when considering the state-of-the-art model while it is related with $1/min(C'1, C'2)$ with the presently disclosed new model. Thus, the multiplexing capability of the 5GS is well exploited and the end-to-end latency is reduced.

Example

Figure 13 illustrates an example of 5GS deployment involving 2 gNBs (101, 102), 7 UEs and one ES per UE. Within each gNB, spatial multiplexing between groups of UEs is provided by a beamforming technique, for example relying on analog beamforming obtained with antenna arrays. Two radio frequency chains are available at each gNBs, the beams (111, 112, 121, 122) can be activated concurrently. For each gNB, the handled UEs are clustered in two groups (spatial separation), as defined hereinabove. The UEs handled by different gNBs do not interfere one on each other, either because the gNBs are far enough apart (spatial separation) or because the gNBs use different frequency channels (frequency separation).

An example of a corresponding virtual topology (1000) is provided in Figure 14, with a main block (100) and a demultiplexing block (200).

The main block (100) has four ingress ports associated with the four above groups and seven egress ports associated with the seven above UEs.

The first ingress port is connected with a first and a second UE, which share concurrently the same time/frequency resource under a first beam (111) of the first node base station (101).

The second ingress port is connected with a third UE, which is handled by a second beam (112) of the first node base station (101) and observes no impact from other UEs.

The third ingress port is connected with a fourth UE, which is handled by a first beam (121) of the second node base station (102) and observes no impact from other UEs.

The fourth ingress port is connected with a fifth UE, a sixth UE and a seventh UE, which share concurrently the same time/frequency resource under a second beam (122) of the second node base station (102).

Application to uplink

Although the examples above are focused on downlink, the person of ordinary skill in the art can easily apply the same principles for uplink, where the ingress ports are DS ports and the egress ports are NW ports.

Two different models are then built for downlink and for uplink.

Indeed, the uplink radio access techniques might be different from the downlink ones.

This may result in different ways to group the UEs, and in different capacity measurements for the internal links of the bridge.

Considering uplink specifically, the main block has as many ingress ports as the number of UEs handled by the gNBs of the wireless bridge and as many egress ports as the number of groups of UEs.

Optionally, the egress ports of the main block are each connected to an ingress port of a multiplexing (Mux) model having a number of egress ports corresponding to the physical number of NW ports of the 5G TSN bridge.

Algorithms and processing circuit

Figure 15 is a flow chart representing a general algorithm of a computer program that may be stored on a storage medium and/or that may be carried as a signal, for the purpose of carrying out the above disclosed method for determining a topology of a time-sensitive network model of a wireless bridge of a communication system within a time-sensitive network, for a downlink application.

The algorithm comprises forming N groups of user equipments (S1) among the set of P user equipments handled by the wireless bridge. N and P are both natural numbers greater than 1.

As already mentioned, a user equipment being activated when involved in a transmission of at least one data flow through the wireless bridge, and a data flow performance being related to a given data flow of the at least one data flow, for any first subset of user equipments belonging to the same group of user equipments, a concurrent activation of more than one user equipment of the first subset decreases the data flow performance, at the wireless bridge, with respect to an activation of a single user equipment among the first subset, and for any second subset of user equipments all belonging to different groups, a concurrent activation of all user equipments of the second subset does not decrease the data flow performance, at the wireless bridge, with respect to an activation of a single user equipment among the second subset.

The algorithm next comprises building (S2) a topology of a time-sensitive network model of the wireless bridge, the time-sensitive network model comprising at least a main block comprising N network-side ports, a network port being associated with a corresponding group of user equipments handled by the wireless bridge, P device-side ports, a device-side port being associated with a corresponding user equipment, and P internal links, an internal link connecting a device-side port associated to a user equipment of a given group with the network-side port associated to the given group.

The algorithm finally comprises providing (S3) the topology of the time-sensitive network model to a centralized network configuration node within the communication system.

Figure 16 is a flow chart representing a general algorithm of a computer program that may be stored on a storage medium and/or that may be carried as a signal, for the purpose of carrying out the above disclosed method for determining a topology of a time-sensitive network model of a wireless bridge of a communication system within a time-sensitive network, for an uplink application.

The algorithm comprises forming (S4) M groups of user equipments within the set of P user equipments such that, an uplink data flow performance being related to an uplink data flow, defined as a data transfer from each activated user equipment to the wireless bridge, for any first subset of user equipments belonging to the same group of user equipments, a concurrent activation of all user equipments of the first subset decreases the uplink data flow performance, at the wireless bridge, with respect to an activation of a single user equipment among the first subset, and for any second subset of user equipments all belonging to different groups, a concurrent activation of all user equipments of the second subset does not decrease the uplink data flow performance, at the wireless bridge, with respect to an activation of a single user equipment among the second subset.

The algorithm next comprises building (S5) a topology of an uplink main block, comprising M network-side ports, a network port being associated with a corresponding group of user equipments handled by the wireless bridge, P device-side ports, a device-side port being associated with a corresponding user equipment, and P internal links, an internal link connecting a device-side port associated to a user equipment of a given group with the network-side port associated to the given group.

The algorithm finally comprises providing the topology of the uplink main block, or (more generally) providing (S6) the topology of a time-sensitive network model of the wireless bridge that comprises such uplink main block, to a centralized network configuration node within the communication system.

Figure 17 schematically represents a processing circuit (90) suitable for running any one, or both, of the above algorithms. The processing circuit comprises a memory (92) for storing a computer program comprising said algorithm or algorithms. The processing circuit further comprises a processor (91) for accessing the memory and running the computer program. The processing circuit further comprises a communication interface (93), that may be controlled by the processor, for transmitting, at least, the topology, or topologies, of the time-sensitive network model to the centralized network configuration node within the communication system.

Of course, it is indifferent that the processor (91) uses a single core or multiple cores for running the computer program. Cloud computing technologies may also be used for the computer program to be run across processors of multiple processing circuits.

Citation List

For any purpose, the following non-patent elements are cited:

- nplcit1: IEEE 802.1Q-2018, as found on https://1.

ieee802.org/tsn/802-1q/;

- nplcit2: IEEE 802.1Qcc-2018, as found on https://1. ieee802.org/tsn/802-1qcc/;
- nplcit3: 3GPP TR 23.734 V16.2.0 (2019-06), "Study on enhancement of 5G System (5GS) for vertical and Local Area Network (LAN) services;
- nplcit4: 3GPP TS 23.501;
- nplcit5: Ana Larrañaga and al., Analysis of 5G-TSN Integration to Support Industry 4.0, Proceedings of the IEEE 25th International Conference on Emerging Technologies and Factory Automation (ETFA 2020); and
- nplcit6: Mannweiler and al., Reliable and Deterministic Mobile Communications for Industry 4.0: Key Challenges and Solutions for the Integration of the 3GPP 5G System with IEEE Time-Sensitive Networking, ITG-Fachbericht 288: Mobilkommunikation, 15 - 16.05.2019.

**Claims**

1. A method for determining a virtual topology of a wireless bridge of a communication system within a time-sensitive network, the wireless bridge handling a set of P user equipments, UEs, the communication system further comprising a centralized network configuration node (5), the method comprising:

- building (S2) a virtual topology (1000) of the wireless bridge, the virtual topology comprising at least a main block (100) comprising:

  ○ N network-side ports (10, 20) with N < P, each network-side port being associated with a corresponding group of user equipments handled by the wireless bridge, the user equipments within a group sharing a non-independent quality of experience, wherein the non-independent quality of experience relates to competitive access to a set of physical channels used by the wireless bridge as a resource, such that user equipments having a competitive access to said set of physical channels are grouped together, and user equipments that have non-competitive access to said set of physical channels belong to different groups,
  ○ P device-side ports (11, 12, 13, 21, 22), a device-side port being associated with a corresponding user equipment, and
  ○ N independent channels, an independent channel connecting the device-side ports associated to the user equipments of a given group with the network-side port associated to the given group, and

- providing (S3) the virtual topology of the wireless bridge to the central network configuration node.

2. The method of claim 1, wherein, the wireless bridge comprising n physical network-side ports:

- the virtual topology further comprises a demultiplexing block (200) comprising:

  ○ n network-side ports (210) with n < N,
  ○ N device-side ports (211, 212), and
  ○ N internal links, an internal link connecting a device-side port with a network-side port,

- a device-side port of the demultiplexing block being associated with a corresponding network-side port of the main block.

3. The method of claim 1 or 2, wherein the groups are formed (S1) within the set of P user equipments according to a predetermined criterion relating to an access of the set of user equipments to a set of physical channels used by the wireless bridge for handling the set of user equipments.

4. The method of claim 3, wherein the groups are formed (S1) further based on indications related to multiplexing capabilities at one or more base stations for a deployment of user equipments.

5. The method of claim 3 or 4, wherein the groups are formed such that,

  ○ a user equipment being activated when involved in a transmission of at least one data flow through the wireless bridge, and
  ○ a data flow performance being related to a given data flow of the at least one data flow,
  ○ for any first subset of user equipments belonging to the same group of user equipments, a concurrent activation of any user equipments of the first subset decreases the data flow performance for at least one given user equipment of the first subset, chosen among the concurrently activated user equipments of the first subset, with respect to when the given user equipment of the first subset is activated alone, and
  ○ for any second subset of user equipments all belonging to different groups, a concurrent activation of any user equipments of the second subset does not decrease the data flow performance for any given user equipment of the second subset, chosen among the concurrently activated user equipments of the second subset, with respect to when the given user equipment of the second subset is activated alone.

6. The method of claim 4, wherein:

- the wireless bridge comprises a plurality of base stations each handling at least one corresponding user equipment, and
- the groups are formed, based on indications of which base station handles each user equipment, so that any user equipments belonging to the same group are handled by the same base station.

7. The method of claim 4, wherein:

- the wireless bridge comprises a given base station handling a subset of the set of P user equipments by orthogonalizing transmission with the user equipments of said subset in a multi-antenna spatial dimension, and
- the groups are formed, based on indications of the antenna used by the given base station to handle each user equipment of the subset, so that any user equipments of the subset belonging to the same group are handled by the same antenna of the given base station.

8. The method of claim 4, wherein:

- the wireless bridge comprises a given base station handling two given user equipments by orthogonalizing transmission with said given two user equipments through a semi-static resource allocation scheme, and
- the groups are formed, based on a indication of said allocation scheme, so that the two given user equipments are affected to different groups.

9. The method of any one of claims 1 to 8, wherein the non-independent quality of experience is applied to data transfers all having the same orientation being either:

- downlink, defined as the data transfers being established from the wireless bridge to each user equipment, and
- uplink, defined as the data transfers being established from each user equipment to the wireless bridge,

such that the virtual topology is adapted to said orientation of the data transfers.

10. The method of claim 9, further comprising:

- building an additional virtual topology of the wireless bridge being adapted to the opposite orientation, the additional virtual topology comprising at least a main block comprising:

  ∘ M network-side ports with M < P, a network-side port being associated with a corresponding group of user equipments handled by the wireless bridge with a non-independent quality of experience applied to said opposite orientation,
  ∘ P device-side ports, a device-side port being associated with a corresponding user equipment, and
  ∘ M independent channels, an independent channel connecting the device-side ports associated to the user equipments of a given group with the network-side port associated to the given group, and

- providing the additional virtual topology of the wireless bridge to the central network configuration node.

11. A communication system within a time-sensitive network, the communication system comprising a wireless bridge handling a set of P user equipments, UEs, the communication system

further comprising a centralized network configuration node (5),
the communication system being configured for:

- building (S2) a virtual topology (1000) of the wireless bridge, the virtual topology comprising at least a main block (100) comprising:

  ∘ N network-side ports (10, 20) with N < P, each network-side port being associated with a corresponding group of user equipments handled by the wireless bridge, the user equipments within a group sharing a non-independent quality of experience, wherein the non-independent quality of experience relates to competitive access to a set of physical channels used by the wireless bridge as a resource, such that user equipments having a competitive access to said set of physical channels are grouped together, and user equipments that have non-competitive access to said set of physical channels belong to different groups,
  ∘ P device-side ports (11, 12, 13, 21, 22), a device-side port being associated with a corresponding user equipment, and
  ∘ N independent channels, an independent channel connecting the device-side ports associated to the user equipments of a given group with the network-side port associated to the given group, and

- providing (S3) the virtual topology of the wireless bridge model to the central network configuration node.

12. A computer program comprising instructions which, when the program is executed by a computer (91), cause the computer to carry out the method of any one of claims 1 to 10.

**Patentansprüche**

1. Verfahren zum Bestimmen einer virtuellen Topologie einer drahtlosen Brücke eines Kommunikationssystems innerhalb eines zeitsensiblen Netzwerkes, wobei die drahtlose Brücke einen Satz von P Benutzerausrüstungen, UE, handhabt, wobei das Kommunikationssystem ferner einen zentralen Netzwerk-Konfigurationsknoten (5) umfasst, wobei das Verfahren umfasst:

- Erstellen (S2) einer virtuellen Topologie (1000) der drahtlosen Brücke, wobei die virtuelle Topologie wenigstens einen Hauptblock (100) umfasst, umfassend:

- N netzwerkseitige Anschlüsse (10, 20) mit N < P, wobei jeder netzwerkseitige Anschluss mit einer entsprechenden Gruppe von Benutzerausrüstungen assoziiert ist, welche von der drahtlosen Brücke gehandhabt wird, wobei die Benutzerausrüstungen innerhalb einer Gruppe eine nicht unabhängige Erfahrungsqualität teilen, wobei sich die nicht unabhängige Erfahrungsqualität auf einen kompetitiven Zugang auf einen Satz physischer Kanäle bezieht, welcher von der drahtlosen Brücke als eine Ressource verwendet wird, so dass Benutzerausrüstungen, welche einen kompetitiven Zugang auf den Satz physischer Kanäle haben, zusammen gruppiert werden, und Benutzerausrüstungen, welche einen nichtkompetitiven Zugang zu dem Satz physischer Kanäle haben, zu unterschiedlichen Gruppen gehören, - P vorrichtungsseitige Anschlüsse (11, 12, 13, 21, 22), wobei ein vorrichtungsseitiger Anschluss mit einer entsprechenden Benutzerausrüstung assoziiert ist, und - N unabhängige Kanäle, wobei ein unabhängiger Kanal die vorrichtungsseitigen Anschlüsse, welche mit den Benutzerausrüstungen einer bestimmten Gruppe assoziiert sind, mit den netzwerkseitigen Anschlüssen verbindet, welche mit der bestimmten Gruppe assoziiert sind, und

- Bereitstellen (S3) der virtuellen Topologie der drahtlosen Brücke an den zentralen Netzwerk-Konfigurationsknoten.

2. Verfahren nach Anspruch 1, wobei die drahtlose Brücke n physische netzwerkseitige Anschlüsse umfasst:

- wobei die virtuelle Topologie ferner einen Block (200) zum Demultiplexen umfasst, umfassend:

- n netzwerkseitige Anschlüsse (210) mit n < N, - N vorrichtungsseitige Anschlüsse (211, 212), und - N interne Links, wobei ein interner Link einen vorrichtungsseitigen Anschluss mit einem netzwerkseitigen Anschluss verbindet,

- wobei ein vorrichtungsseitiger Anschluss des Blocks zum Demultiplexen mit einem entsprechenden netzwerkseitigen Anschluss des Hauptblocks assoziiert ist.

3. Verfahren nach Anspruch 1 oder 2, wobei die Gruppen gemäß einem vorbestimmten Kriterium, welches sich auf einen Zugang der Gruppe von Benutzerausrüstungen auf einen Satz physischer Kanäle bezieht, welche von der drahtlosen Brücke zur Handhabung des Satzes von Benutzerausrüstungen verwendet wird, innerhalb des Satzes von P Benutzerausrüstungen gebildet werden (S1).

4. Verfahren nach Anspruch 3, wobei die Gruppen ferner auf Grundlage von Indizierungen gebildet werden (S1), welche sich auf Möglichkeiten zum Multiplexen an einer oder mehreren Basisstationen für einen Einsatz der Benutzerausrüstungen beziehen.

5. Verfahren nach Anspruch 3 oder 4, wobei die Gruppen derart gebildet sind, dass

- eine Benutzerausrüstung aktiviert wird, wenn sie an einer Übertragung wenigstens eines Datenflusses durch die drahtlose Brücke beteiligt ist, und - eine Datenflussleistung auf einen bestimmten Datenfluss des wenigstens einen Datenflusses bezogen ist, - für einen jeglichen ersten Teilsatz von Benutzerausrüstungen, welche zu der gleichen Gruppe von Benutzerausrüstungen gehören, eine simultane Aktivierung jeglicher Benutzerausrüstungen des ersten Teilsatzes die Datenflussleistung für wenigstens eine bestimmte Benutzerausrüstung des ersten Teilsatzes, welche unter den simultan aktivierten Benutzerausrüstungen des ersten Teilsatzes ausgewählt wird, in Bezug auf einen Zeitpunkt reduziert, wenn die bestimmte Benutzerausrüstung der ersten Teilsatzes alleine aktiviert wird, und

- für einen jeglichen zweiten Teilsatz von Benutzerausrüstungen, welche alle zu unterschiedlichen Gruppen gehören, eine simultane Aktivierung jeglicher Benutzerausrüstungen des zweiten Teilsatzes die Datenflussleistung für eine jegliche Benutzerausrüstung des zweiten Teilsatzes, welche unter den simultan aktivierten Benutzerausrüstungen des zweiten Teilsatzes ausgewählt wird, in Bezug auf einen Zeitpunkt nicht reduziert, wenn die bestimmte Benutzerausrüstung der zweiten Teilsatzes alleine aktiviert wird.

6. Verfahren nach Anspruch 4, wobei:

- die drahtlose Brücke eine Mehrzahl von Basisstationen umfasst, von welchen jede wenigstens eine entsprechende Benutzerausrüstung handhabt, und
- die Gruppen auf Grundlage von Indizierungen gebildet werden, welche Basisstation jede Benutzerausrüstung handhabt, so dass jegliche Benutzerausrüstungen, welche zu der gleichen Gruppe gehören, durch die gleiche Basisstation gehandhabt werden.

7. Verfahren nach Anspruch 4, wobei:

- die drahtlose Brücke eine bestimmte Basisstation umfasst, welche einen Teilsatz des Satzes von P Benutzerausrüstungen durch Orthogonalisieren einer Übertragung mit den Benutzerausrüstungen des Teilsatzes in einer räumlichen Multi-Antennen-Dimension handhabt, und
- die Gruppen auf Grundlage von Indizierungen der Antenne gebildet werden, welche von der bestimmten Basisstation verwendet werden, um jede Benutzerausrüstung des Teilsatzes zu handhaben, so dass jegliche Benutzerausrüstungen des Teilsatzes, welche zu der gleichen Gruppe gehören, durch die gleiche Antenne der bestimmten Basisstation gehandhabt werden.

8. Verfahren nach Anspruch 4, wobei:

- die drahtlose Brücke eine bestimmte Basisstation umfasst, welche zwei bestimmte Benutzerausrüstungen durch Orthogonalisieren einer Übertragung mit den bestimmten zwei Benutzerausrüstungen mittels eines halbstatischen Ressourcenzuordnungsschemas handhabt, und

- die Gruppen auf Grundlage einer Indizierung des Zuordnungsschemas gebildet werden, so dass die zwei bestimmten Benutzerausrüstungen unterschiedliche Gruppen betreffen.

9. Verfahren nach einem der Ansprüche 1 bis 8, wobei die nicht unabhängige Erfahrungsqualität auf Datentransfers angewendet wird, welche alle die gleiche Orientierung aufweisen, welche eines ist, aus:

- einem Downlink, welcher als die Datentransfers definiert ist, welche von der drahtlosen Brücke für jede Benutzerausrüstung etabliert werden, und
- einem Uplink, welcher definiert wird, wenn die Datentransfers von jeder Benutzerausrüstung an die drahtlose Brücke etabliert werden,

so dass die virtuelle Topologie an die Orientierung der Datentransfers angepasst wird.

10. Verfahren nach Anspruch 9, ferner umfassend:

- Erstellen einer weiteren virtuellen Topologie der drahtlosen Brücke, welche auf die entgegengesetzte Orientierung angepasst ist, wobei die weitere virtuelle Topologie wenigstens einen Hauptblock umfasst, umfassend:

- M netzwerkseitige Anschlüsse mit M < P, wobei ein netzwerkseitiger Anschluss mit einer entsprechenden Gruppe von Benutzerausrüstungen assoziiert ist, welche von der drahtlosen Brücke mit einer nicht unabhängigen Erfahrungsqualität gehandhabt wird, welche auf die entgegengesetzte Orientierung angewendet wird,
- P vorrichtungsseitige Anschlüsse, wobei ein vorrichtungsseitiger Anschluss mit einer entsprechenden Benutzerausrüstung assoziiert ist, und
- M unabhängige Kanäle, wobei ein unabhängiger Kanal die vorrichtungsseitigen Anschlüsse, welche mit den Benutzerausrüstungen einer bestimmten Gruppe assoziiert sind, mit den netzwerkseitigen Anschlüssen verbindet, welche mit der bestimmten Gruppe assoziiert sind, und

- Bereitstellen der weiteren virtuellen Topologie der drahtlosen Brücke an den zentralen Netzwerk-Konfigurationsknoten.

11. Kommunikationssystem innerhalb eines zeitsensiblen Netzwerkes, wobei das Kommunikationssystem eine drahtlose Brücke umfasst, welche einen Satz von P Benutzerausrüstungen, UE, handhabt, wobei das Kommunikationssystem ferner einen zentralen Netzwerk-Konfigurationsknoten (5) umfasst, wobei das Kommunikationssystem eingerichtet ist, zum:

- Erstellen (S2) einer virtuellen Topologie (1000) der drahtlosen Brücke, wobei die virtuelle Topologie wenigstens einen Hauptblock (100) umfasst, umfassend:

- N netzwerkseitige Anschlüsse (10, 20) mit N < P, wobei jeder netzwerkseitige Anschluss mit einer entsprechenden Gruppe von Benutzerausrüstungen assoziiert ist, welche von der drahtlosen Brücke gehandhabt wird, wobei die Benutzerausrüstungen innerhalb einer Gruppe eine nicht unabhängige Erfahrungsqualität teilen, wobei sich die nicht unabhängige Erfahrungsqualität auf einen kompetitiven Zugang auf einen Satz physischer Kanäle bezieht, welcher von der drahtlosen Brücke als eine Ressource verwendet wird, so dass Benutzerausrüstungen, welche einen kompetitiven Zugang auf den Satz physischer Kanäle haben, zusammen gruppiert werden, und Benutzerausrüstungen, welche einen nichtkompetitiven Zugang zu dem Satz physischer Kanäle haben, zu unterschiedlichen Gruppen gehören,
- P vorrichtungsseitige Anschlüsse (11, 12, 13, 21, 22), wobei ein vorrichtungsseitiger Anschluss mit einer entsprechenden Benutzerausrüstung assoziiert ist, und
- N unabhängige Kanäle, wobei ein unabhängiger Kanal die vorrichtungsseitigen Anschlüsse, welche mit den Benutzerausrüstungen einer bestimmten Gruppe assoziiert sind, mit den netzwerkseitigen Anschlüssen verbindet, welche mit der bestimmten Gruppe assoziiert sind, und

- Bereitstellen (S3) der virtuellen Topologie des drahtlosen Brücke-Modells an den zentralen Netzwerk-Konfigurationsknoten.

**12.** Computerprogramm, umfassend Anweisungen, welche, wenn das Programm durch einen Computer (91) ausgeführt wird, den Computer dazu veranlassen, das Verfahren nach einem der Ansprüche 1 bis 10 durchzuführen.

## Revendications

**1.** Procédé de détermination d'une topologie virtuelle d'un pont sans fil d'un système de communication au sein d'un réseau sensible au temps, le pont sans fil gérant un ensemble de P équipements utilisateur, UE, le système de communication comprenant en outre un nœud de configuration de réseau centralisé (5), le procédé comprenant :

- la construction (S2) d'une topologie virtuelle (1000) du pont sans fil, la topologie virtuelle comprenant au moins un bloc principal (100) comprenant :

◦ N ports côté réseau (10, 20) avec N < P, chaque port côté réseau étant associé à un groupe correspondant d'équipements utilisateur gérés par le pont sans fil, les équipements utilisateur au sein d'un groupe partageant une qualité d'expérience non indépendante, dans lequel la qualité d'expérience non indépendante concerne un accès concurrentiel à un ensemble de canaux physiques utilisés par le pont sans fil comme ressource, de sorte que des équipements utilisateur ayant un accès concurrentiel audit ensemble de canaux physiques sont regroupés ensemble, et des équipements utilisateur qui ont un accès non concurrentiel audit ensemble de canaux physiques appartiennent à des groupes différents,
◦ P ports côté dispositif (11, 12, 13, 21, 22), un port côté dispositif étant associé à un équipement utilisateur correspondant, et
◦ N canaux indépendants, un canal indépendant reliant les ports côté dispositif associés aux équipements utilisateur d'un groupe donné au port côté réseau associé au groupe donné, et

- la fourniture (S3) de la topologie virtuelle du pont sans fil au nœud de configuration de réseau central.

**2.** Procédé selon la revendication 1, dans lequel, le pont sans fil comprenant n ports physiques côté réseau :

- la topologie virtuelle comprend en outre un bloc de démultiplexage (200) comprenant :

◦ n ports côté réseau (210) avec n < N,
◦ N ports côté dispositif (211, 212), et
◦ N liens internes, un lien interne reliant un port côté dispositif à un port côté réseau,

- un port côté dispositif du bloc de démultiplexage étant associé à un port côté réseau correspondant du bloc principal.

**3.** Procédé selon la revendication 1 ou 2, dans lequel les groupes sont formés (S1) au sein de l'ensemble de P équipements utilisateur selon un critère prédéterminé relatif à un accès de l'ensemble d'équipements utilisateur à un ensemble de canaux physiques utilisés par le pont sans fil pour gérer l'ensemble d'équipements utilisateur.

4. Procédé selon la revendication 3, dans lequel les groupes sont formés (S1) en outre sur la base d'indications liées à des capacités de multiplexage au niveau d'une ou plusieurs stations de base pour un déploiement d'équipements utilisateur.

5. Procédé selon la revendication 3 ou 4, dans lequel les groupes sont formés de sorte que,

  ∘ un équipement utilisateur est activé lorsqu'il est impliqué dans une émission d'au moins un flux de données à travers le pont sans fil, et
  ∘ une performance de flux de données est liée à un flux de données donné dudit au moins un flux de données,
  ∘ pour tout premier sous-ensemble d'équipements utilisateur appartenant au même groupe d'équipements utilisateur, une activation simultanée de quelconques équipements utilisateur du premier sous-ensemble diminue la performance de flux de données pour au moins un équipement utilisateur donné du premier sous-ensemble, choisi parmi les équipements utilisateur activés simultanément du premier sous-ensemble, par rapport à un moment où l'équipement utilisateur donné du premier sous-ensemble est activé seul, et
  ∘ pour tout second sous-ensemble d'équipements utilisateur appartenant tous à des groupes différents, une activation simultanée de quelconques équipements utilisateur du second sous-ensemble ne diminue pas la performance de flux de données pour tout équipement utilisateur donné du second sous-ensemble, choisi parmi les équipements utilisateur activés simultanément du second sous-ensemble, par rapport à un moment où l'équipement utilisateur donné du second sous-ensemble est activé seul.

6. Procédé selon la revendication 4, dans lequel :

  - le pont sans fil comprend une pluralité de stations de base gérant chacune au moins un équipement utilisateur correspondant, et
  - les groupes sont formés, sur la base d'indications sur la station de base qui gère chaque équipement utilisateur, de sorte que de quelconques équipements utilisateur appartenant au même groupe sont gérés par la même station de base.

7. Procédé selon la revendication 4, dans lequel :

  - le pont sans fil comprend une station de base donnée gérant un sous-ensemble de l'ensemble de P équipements utilisateur par orthogonalisation de l'émission avec les équipements utilisateur dudit sous-ensemble dans une dimension spatiale multi-antennes, et
  - les groupes sont formés, sur la base d'indications de l'antenne utilisée par la station de base donnée pour gérer chaque équipement utilisateur du sous-ensemble, de sorte que de quelconques équipements utilisateur du sous-ensemble appartenant au même groupe sont gérés par la même antenne de la station de base donnée.

8. Procédé selon la revendication 4, dans lequel :

  - le pont sans fil comprend une station de base donnée gérant deux équipements utilisateur donnés par orthogonalisation de l'émission avec lesdits deux équipements utilisateur donnés par le biais d'un schéma d'allocation de ressources semi-statique, et
  - les groupes sont formés, sur la base d'une indication dudit schéma d'allocation, de sorte que les deux équipements utilisateurs donnés sont affectés à des groupes différents.

9. Procédé selon l'une quelconque des revendications 1 à 8, dans lequel la qualité d'expérience non indépendante est appliquée à des transferts de données ayant tous la même orientation, qui est soit :

  - une liaison descendante, définie comme les transferts de données qui sont établis depuis le pont sans fil vers chaque équipement utilisateur, et
  - une liaison montante, définie comme les transferts de données qui sont établis depuis chaque équipement utilisateur vers le pont sans fil,

de telle sorte que la topologie virtuelle est adaptée à ladite orientation des transferts de données.

10. Procédé selon la revendication 9, comprenant en outre :

  - la construction d'une topologie virtuelle supplémentaire du pont sans fil qui est adaptée à l'orientation opposée, la topologie virtuelle supplémentaire comprenant au moins un bloc principal comprenant :

    ∘ M ports côté réseau avec M < P, un port côté réseau étant associé à un groupe correspondant d'équipements utilisateur gérés par le pont sans fil avec une qualité d'expérience non indépendante appliquée à ladite orientation opposée,

◦ P ports côté dispositif, un port côté dispositif étant associé à un équipement utilisateur correspondant, et

◦ M canaux indépendants, un canal indépendant reliant les ports côté dispositif associés aux équipements utilisateur d'un groupe donné au port côté réseau associé au groupe donné, et

- la fourniture de la topologie virtuelle supplémentaire du pont sans fil au nœud de configuration de réseau central.

11. Système de communication au sein d'un réseau sensible au temps, le système de communication comprenant un pont sans fil gérant un ensemble de P équipements utilisateur, UE, le système de communication comprenant en outre un nœud de configuration de réseau centralisé (5), le système de communication étant configuré pour :

- la construction (S2) d'une topologie virtuelle (1000) du pont sans fil, la topologie virtuelle comprenant au moins un bloc principal (100) comprenant :

◦ N ports côté réseau (10, 20) avec N < P, chaque port côté réseau étant associé à un groupe correspondant d'équipements utilisateur gérés par le pont sans fil, les équipements utilisateur au sein d'un groupe partageant une qualité d'expérience non indépendante, dans lequel la qualité d'expérience non indépendante concerne un accès concurrentiel à un ensemble de canaux physiques utilisés par le pont sans fil comme ressource, de sorte que des équipements utilisateur ayant un accès concurrentiel audit ensemble de canaux physiques sont regroupés ensemble, et des équipements utilisateur qui ont un accès non concurrentiel audit ensemble de canaux physiques appartiennent à des groupes différents,

◦ P ports côté dispositif (11, 12, 13, 21, 22), un port côté dispositif étant associé à un équipement utilisateur correspondant, et

◦ N canaux indépendants, un canal indépendant reliant les ports côté dispositif associés aux équipements utilisateur d'un groupe donné au port côté réseau associé au groupe donné, et

- la fourniture (S3) de la topologie virtuelle du modèle de pont sans fil au nœud de configuration de réseau central.

12. Programme informatique comprenant des instructions qui, lorsque le programme est exécuté par un ordinateur (91), amènent l'ordinateur à réaliser le procédé selon l'une quelconque des revendications 1 à 10.

Fig. 1

Fig. 2

Flow direction

$B_{n-1}$    $Dc$    $B_n$   $D_{i,e}^{dep}$    $B_{n+1}$

$D_{i,e}^{ind}$

e    i    e    i

3        3        3

## Fig. 3

6     7     8

$B_{n-1}(e)$

t

$B_n(e)$

$T_{DD}^n . P$     $T_{ID}^n +$     $T_{DD}^{n+1} . P$

$+ \mathrm{TxProp}(B_{n-1}(e))$

## Fig. 4

Fig. 5

Fig. 6

300               100

$B_0$

310     320

B    11

$C_1$

10    $C_2$    12

Fig. 7

100      101

11

10

NW-TT / UPF

UE/DS-TT

UE/DS-TT

21

102

Fig. 8

23

Fig. 9

Fig. 10

100

11

10     101

| UE/DS-TT |

NW-TT / UPF    ((ᵖ))

Frequency

| RR |   | RR |
| RR |   |    |
| RR |   | RR |
| RR |   | RR |

Time

Radio Resources

| UE/DS-TT |

21

Fig. 11

300          200          100     1000

| B₀ |        | B'      211 |        | B    C'₁    11 |
|      |        |    ∞         |        |    10   C'₂    |
|      |        |    ∞         |        |               |
|      |        | 210   212 |        | 20      21 |

Fig. 12

Fig. 13

Fig. 14

S1 ──→ | DET N GRP |

S2 ──→ | DET TOP DL TSN MODEL |

S3 ──→ | PROV TOP DL TSN MODEL |

Fig. 15

S4 ──→ | DET M GRP |

S5 ──→ | DET TOP UL TSN MODEL |

S6 ──→ | PROV TOP UL TSN MODEL |

Fig. 16

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021097637 A

**Non-patent literature cited in the description**

- **FARKAS, J** ; **VARGA, B.** ; **MIKLÓS, G** ; **SACHS, J**. 5G-TSN integration meets networking requirements for industrial automation. *Ericsson Technology Review*, August 2019
- **ANA LARRAÑAGA**. Analysis of 5G-TSN Integration to Support Industry 4.0. *Proceedings of the IEEE 25th International Conference on Emerging Technologies and Factory Automation (ETFA 2020)*

- **MANNWEILER**. Reliable and Deterministic Mobile Communications for Industry 4.0: Key Challenges and Solutions for the Integration of the 3GPP 5G System with IEEE Time-Sensitive Networking. *ITG-Fachbericht 288: Mobilkommunikation*, 15 May 2019